# EUROPEAN PATENT APPLICATION

(11) **EP 4 582 636 A1**
(43) Date of publication of application: **09.07.2025**
(21) Application number: 23859920.3
(22) Date of filing: 27.07.2023
(51) Int. Cl.: E02F 9/00, B60H 1/22, B60K 11/04, E02F 9/16, F01P 3/18, F01P 3/20, F01P 11/10

(54) **ELECTRIC CONSTRUCTION MACHINE**

(30) Priority: 30.08.2022 JP 2022137250
(71) Applicant: Hitachi Construction Machinery Tierra Co., Ltd., Shiga 528-0061, (JP)
(72) Inventor: KUWAHARA, Takuma, Koka-shi, Shiga 528-0061 (JP); KIHARA, Seiichi, Koka-shi, Shiga 528-0061 (JP); FURUKAWA, Yuuta, Koka-shi, Shiga 528-0061 (JP)
(74) Representative: MERH-IP Matias Erny Reichl Hoffmann Patentanwälte PartG mbB
(86) International application number: PCT/JP2023/027556
(87) International publication number: WO 2024/048151

(57) **Abstract**

An electric hydraulic excavator (1) is provided with a heater core (34) for heating, an electrical heater (35) for heating a second heat exchange liquid to be supplied to the heater core (34), and a second reserve tank (39) into which the second heat exchange liquid flows and from which the second heat exchange liquid flows out. On top of this, a partition wall (12) is provided to partition between a first cooling fan (28) and the electrical heater (35), and a first reserve tank (29) is located on the same side as the first cooling fan (28) on a basis of the partition wall (12) as a boundary, and a first heat exchange liquid for cooling an electric motor (15) and the like flows into and flows out from the first reserve tank (29) with a change in temperature. On the other hand, the second reserve tank (39) is located at the opposite side to the first cooling fan (28) on a basis of the partition wall (12) as a boundary.

## Description

### TECHNICAL FIELD

The present invention relates to electric construction machines, such as a hydraulic excavator provided with an electric motor as a power source.

### BACKGROUND ART

In general, a hydraulic excavator as a representative example of a construction machine is provided with an automotive lower traveling structure, an upper revolving structure mounted via a revolving device on the lower traveling structure to be capable of revolving thereto and a working mechanism provided on the front side of the upper revolving structure to be operated by a hydraulic actuator.

The hydraulic excavator is provided with an engine as a prime mover, a radiator that cools a first heat exchange liquid (coolant liquid) warmed by cooling the engine, a cooling fan that applies cooling air to the radiator, and a first reserve tank into which the first heat exchange liquid flows and from which the first heat exchange liquid flows out, wherein a volume of the first heat exchange liquid increases or decreases with a change in temperature (Patent Document 1).

Here, according to Patent Document 1, for avoiding the first heat exchange liquid in the first reserve tank from being subject to a thermal effect of the engine, the first reserve tank is located in a position of being directly exposed to the cooling air of the cooling fan, enhancing a cooling efficiency of the first heat exchange liquid.

In recent years, for suppressing global warming and air pollution, an electric hydraulic excavator provided with an electric motor as a power source instead of the engine has been put to practical use. This electric hydraulic excavator supplies hydraulic oil for operation (operating oil) to a hydraulic actuator by driving a hydraulic pump by the electric motor. This electric hydraulic excavator is provided with, as similar to the hydraulic excavator provided with the engine, a radiator that releases heat of a first heat exchange liquid warmed by cooling the electric motor, a cooling fan, and a first reserve tank.

In addition, there are known some electric hydraulic excavators that are provided with a heating unit for improving a working environment of an operator. This heating unit includes a heater core for heating, an electrical heater for heating a second heat exchange liquid to be supplied to the heater core, and a second reserve tank into which the second heat exchange liquid flows and from which the second heat exchange liquid flows out, wherein a volume of the second heat exchange liquid increases or decreases with a change in temperature (Patent Document 2).

### PRIOR ART DOCUMENT

### PATENT DOCUMENT

Patent Document 1: Japanese Patent No. 6527287
Patent Document 2: Japanese Patent Laid-Open No. 2002-61230 A

### SUMMARY OF THE INVENTION

Incidentally, in a case of the hydraulic excavator of an engine drive system according to Patent Document 1, it is possible to enhance the cooling efficiency of the first heat exchange liquid due to the radiator, caused by applying the cooling air of the cooling fan to the first reserve tank. However, since the electric hydraulic excavator is provided with the second reserve tank into which the second heat exchange liquid flows and from which the second heat exchange liquid flows out, the cooling air of the cooling fan is applied also to the second reserve tank to lower a temperature of the second heat exchange liquid, leading to the reduction of the heating efficiency. Particularly, since a compact electric hydraulic excavator is limited in the installation space for the equipment devices, the cooling fan and the second reserve tank are arranged in a position close to each other. Therefore, there is posed a problem that there is a concern for the reduction in the heating efficiency.

The present invention is made in consideration of the above-mentioned problem in the conventional technology, and an object of the present invention is to provide an electric construction machine that can efficiently cool a first heat exchange liquid for cooling an electric motor, without reducing a heating efficiency.

An aspect of the present invention is provided with an electric construction machine comprising: an electric motor as a power source; a radiator that cools a first heat exchange liquid warmed by cooling the electric motor; a cooling fan that applies cooling air to the radiator; and a first reserve tank into which the first heat exchange liquid flows and from which the first heat exchange liquid flows out, characterized by including: a heater core for heating; an electrical heater for heating a second heat exchange liquid to be supplied to the heater core; and a second reserve tank into which the second heat exchange liquid flows and from which the second heat exchange liquid flows out, wherein a partition wall is provided between the cooling fan and the electrical heater, the first reserve tank is located on the same side as the cooling fan on a basis of the partition wall as a boundary, and the second reserve tank is located on the same side as the electrical heater on a basis of the partition wall as a boundary.

According to the aspect of the present invention, the cooling air of the cooling fan can be prevented from hitting the second reserve tank to improve the heating efficiency.

### BRIEF DESCRIPTION OF THE DRAWINGS

Fig. 1 is a right side view showing an electric hydraulic excavator according to an embodiment of the present invention.
Fig. 2 is a plan view showing an upper revolving structure in a state where an exterior cover is omitted.
Fig. 3 is a plan view showing a right section of the upper revolving structure in an enlarging manner.
Fig. 4 is a right side view showing the right section of the upper revolving structure in an enlarging manner.
Fig. 5 is a front view showing a partition wall, a second reserve tank and the like, as viewed in a direction of arrows V - V in Fig. 4.
Fig. 6 is a configuration view of a cooling circuit in a case of using a first heat exchange liquid.
Fig. 7 is a configuration view of a heating circuit in a case of using a second heat exchange liquid.

### MODE FOR CARRYING OUT THE INVENTION

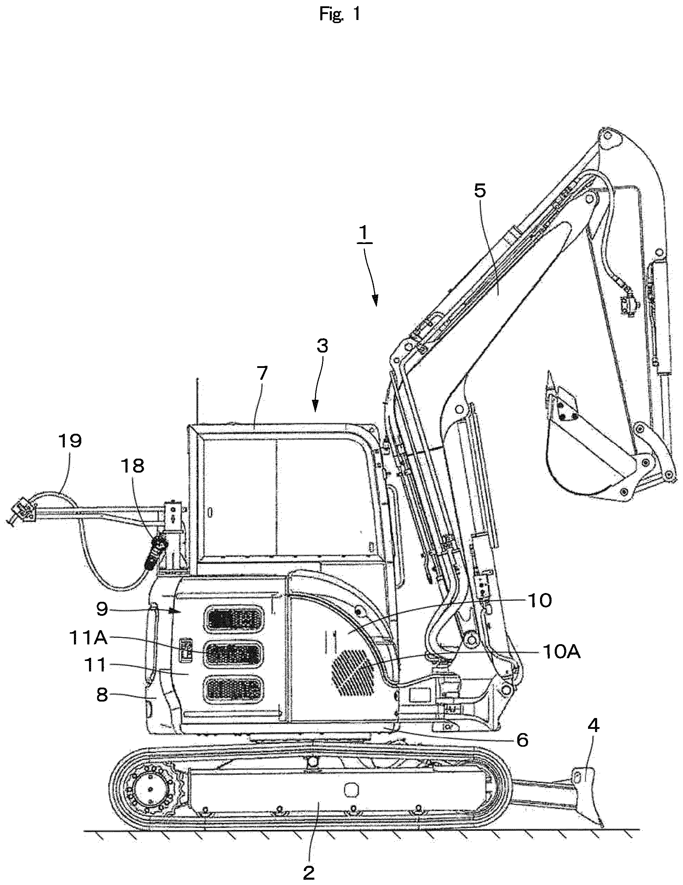

Hereinafter, an electric construction machine according to an embodiment of the present invention will be in detail explained referring to Fig. 1 to Fig. 7 by taking a case of being applied to a compact electric hydraulic excavator as an example.

In Fig. 1, an electric hydraulic excavator 1 representative of an electric construction machine is provided with an automotive lower traveling structure 2 of a crawler type and an upper revolving structure 3 mounted on the lower traveling structure 2 to be capable of revolving thereto. A blade device 4 (earth removing device) is provided on the front side of the lower traveling structure 2 to be rotatable in an upper-lower direction and an earth removing (ground leveling) work and the like are performed by using this blade device 4. A swing type working mechanism 5 is provided on the front side of the upper revolving structure 3. The working mechanism 5 is used to perform an excavating work of earth and sand or the like.

The upper revolving structure 3 is provided with a revolving frame 6 as a support structure. The revolving frame 6 is configured as a base of the upper revolving structure 3. The revolving frame 6 is attached on the lower traveling structure 2 and the working mechanism 5 is attached on the front side of the revolving frame 6.

The revolving frame 6 is provided with a cab 7, a counterweight 8, an exterior cover 9, a partition wall 12, an electric motor 15, a hydraulic pump 16, a battery unit 17, an inverter 20, a battery charger 21, a radiator 22, a first cooling fan 28, a first reserve tank 29, an operating oil tank 30, an oil cooler 31, a second cooling fan 32, an electrical heater 35, a second reserve tank 39 and the like, which are mounted thereon.

The cab 7 is provided on the left side of the revolving frame 6. An inner part of the cab 7 is formed as an operator's room in which an operator gets. An operator's seat for the operator to sit on, a lever and a pedal for traveling that control a travel of the lower traveling structure 2, working operational levers and the like for controlling operations of the working mechanism 5 and the like (none of them are shown) are arranged in the operator's room.

The counterweight 8 is provided on the rear part of the revolving frame 6. The counterweight 8 is a heavy bob for maintaining a weight balance to the working mechanism 5. An after-mentioned feed cable 19 is removably connected to the upper part of the counterweight 8.

The exterior cover 9 covers the upper revolving structure 3 around the cab 7. Specifically, the exterior cover 9 includes a left cover part (not shown) that is positioned on the left side of the cab 7 to cover between the cab 7 and the counterweight 8, a right front cover part 10, which covers from the intermediate part to the front side in the front-back direction, on the right side of the cab 7, and a right rear cover part 11, which covers the rear side from the intermediate part to the counterweight 8 in the front-back direction, on the right side of the cab 7.

The right front cover part 10 is provided with a discharge port 10A for discharging cooling air in a position facing the oil cooler 31 and the second cooling fan 32 which will be described later. The right rear cover part 11 is provided with a discharge port 11A for discharging cooling air in a position facing the radiator 22 and the first cooling fan 28 which will be described later.

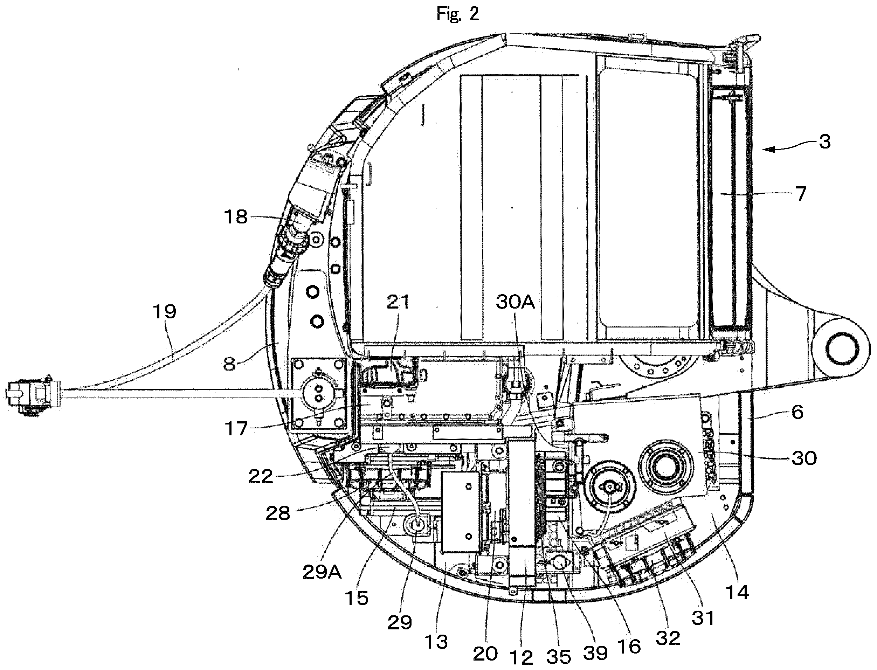

As shown in Fig. 2, the partition wall 12 is located on the right side of the revolving frame 6. Specifically, the partition wall 12 is positioned in the intermediate part of the revolving frame 6 in the front-back direction and is formed as a partition plate extending in the left-right direction and the upper-lower direction. The partition wall 12 partitions the right side of the revolving frame 6 into a location area of an electrical equipment system including the after-mentioned electric motor 15 and into a location area of a hydraulic system including the hydraulic pump 16 and the operating oil tank 30 which will be described later. Because of this configuration, the partition wall 12 serves as a partition between the first cooling fan 28 and the electrical heater 35.

In addition, the partition wall 12 isolates the right space surrounded by the revolving frame 6, the counterweight 8 and the exterior cover 9 into an electrical equipment room 13 on the rear side and into a tank room 14 on the front side. The electric motor 15, the battery unit 17, the inverter 20, the battery charger 21, the radiator 22, the first cooling fan 28 and the first reserve tank 29 which will be described later, and the like are arranged in the electrical equipment room 13. On the other hand, the hydraulic pump 16, the operating oil tank 30, the oil cooler 31, the second cooling fan 32, the electrical heater 35, the second reserve tank 39 and the like are arranged in the tank room 14.

The electric motor 15 is configured as a power source of the electric hydraulic excavator **1.** The electric motor 15 is located on the right rear side of the revolving frame 6 and is attached in a direction where an axis line of an output shaft in the electric motor 15 extends in the front-back direction, for example. The electric motor 15 rotates the output shaft by electric power supplied from the after-mentioned battery unit 17 to drive the hydraulic pump 16 connected to this output shaft. In addition, the electric motor 15 is formed as an AC motor, for example. DC power from the battery unit 17 is converted into AC power by the inverter 20, which is supplied to the electric motor 15.

Here, the electric motor 15 generates heat due to electrical energy being converted into thermal energy by resistance. Therefore, the electric motor 15 is provided with, for suppressing a temperature rise thereof due to the heat generation, a first heat exchange liquid passage (not shown) in which a first heat exchange liquid (coolant liquid) flows. An after-mentioned first pipe line 23 is connected to the first heat exchange liquid passage.

The hydraulic pump 16 is attached to the front side of the electric motor 15. The hydraulic pump 16 is driven by the electric motor 15 to supply the operating oil from the after-mentioned operating oil tank 30 to hydraulic cylinders provided in the working mechanism 5 and hydraulic actuators of hydraulic motors and the like provided in the lower traveling structure 2. The hydraulic pump 16 is connected to the output shaft of the electric motor 15.

The battery unit 17 stores electric power to be supplied to the electric motor 15. The battery unit 17 is positioned on the rear-part lower side of the cab 7 and is attached on the revolving frame 6. The battery unit 17 is connected via a feed connector 18 and a feed cable 19 to a power generator and an external power source of a commercial power source or the like (not shown) . In addition, the battery unit 17 is connected via the inverter 20 and the like to the electric motor 15. In addition, in a charge mode, when the feed cable 19 is connected to the feed connector 18, the electric power from the external power source is converted to DC power, which charges up the battery unit 17. In an internal power mode, the DC power from the battery unit 17 is converted to AC power in the inverter 20, which is supplied to the electric motor 15. In an external power mode, the power from the external power source is similarly converted in the inverter 20, which is supplied to the electric motor 15, while the extra power is supplied to the battery unit 17.

The inverter 20 is positioned in back of the partition wall 12 and is located on the upper side of the electric motor 15. The inverter 20 converts the DC power supplied from the battery unit 17 to the AC power, which is supplied to the electric motor 15. The inverter 20 generates heat by a load (resistance) at the time of switching the electric power. Therefore, the inverter 20 is, as similar to the electric motor 15, provided with a first heat exchange liquid passage (not shown) for the flow of the first heat exchange liquid. The first pipe line 23 is connected to the first heat exchange liquid passage following the electric motor 15.

The battery charger 21 is connected to the external power source, and thereby the AC power from the external power source is converted to the DC power, which is supplied to the battery unit 17. The battery charger 21 is electrically connected via a switching device (not shown) to the battery unit 17. The feed cable 19 from the external power source can be connected to the battery charger 21. The battery charger 21 generates heat by a load (resistance) at the time of switching the electric power (DC and AC). Therefore, the battery charger 21 is provided with, as similar to the inverter 20, a first heat exchange liquid passage for the flow of the first heat exchange liquid. A second pipe line 25 is connected to the first heat exchange liquid passage.

The radiator 22 is a heat exchanger that cools the first heat exchange liquid for cooling electrical equipment devices of as the electric motor 15, the inverter 20, the battery charger 21 and the like. In other words, the radiator 22 cools the first heat exchange liquid warmed by cooling the electric motor 15 and the like. The radiator 22 is provided in a state of extending in the front-back direction and in the upper-lower direction in a position closer to the center in the right side in back of the revolving frame 6. In addition, the radiator 22 is located between the electric motor 15 and the battery unit 17. The radiator 22 releases the heat of the first heat exchange liquid flowing in a plurality of narrow pipes to the cooling air generated by the first cooling fan 28 to lower the temperature of the first heat exchange liquid. The first pipe line 23, the second pipe line 25 and a return pipe line 27 which will be described later are connected to the radiator 22.

Further, the after-mentioned first reserve tank 29 is connected to the radiator 22. Because of this configuration, the first heat exchange liquid a volume of which increases or decreases with a change in temperature is caused to flow into and out from the first reserve tank 29 to permit a change in a volume of the first heat exchange liquid.

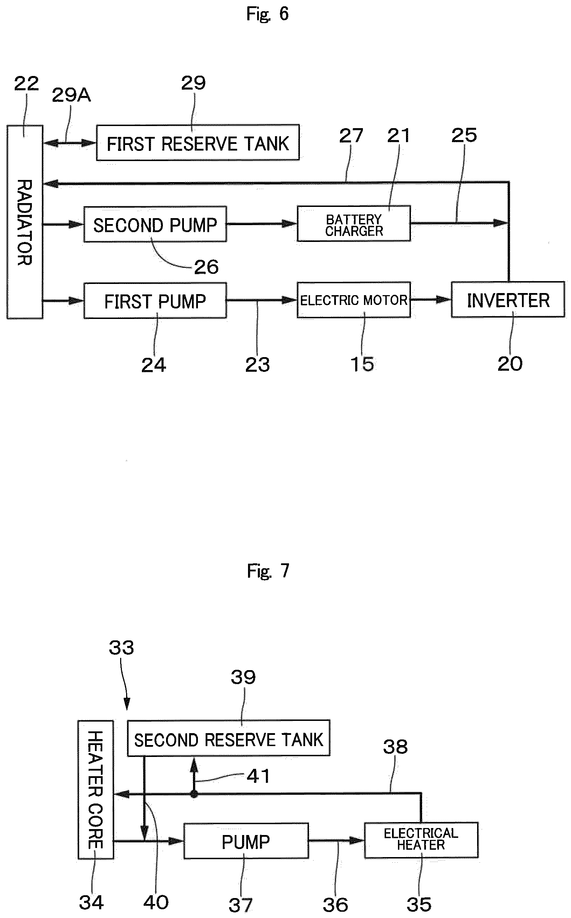

As shown in Fig. 6, the first pipe line 23 is connected to the radiator 22. The first pipe line 23 is provided with a first pump 24 on the upstream side (radiator 22-side). The first pipe line 23 goes through the first heat exchange liquid passage of the electric motor 15 and is connected to the first heat exchange liquid passage of the inverter 20 on the downstream side. The first pipe line 23 is a pipe line that supplies the first heat exchange liquid to the electric motor 15 and the inverter 20.

The second pipe line 25 is connected, as similar to the first pipe line 23, to the radiator 22. The second pipe line 25 is provided with a second pump 26 on the upstream side (radiator 22-side). The second pipe line 25 passes through the first heat exchange liquid passage of the battery charger 21 and is connected to the after-mentioned return pipe line 27 on the downstream side. The second pipe line 25 is a pipe line that supplies the first heat exchange liquid to the battery charger 21. It should be noted that the second pipe line 25 may be abolished, resulting in that the first heat exchange liquid is supplied to the electric motor 15, the inverter 20 and the battery charger 21 by the first pipe line 23 only.

The return pipe line 27 is connected to the first heat exchange liquid passage of the inverter 20 on the upstream side, and is connected to the radiator 22 on the downstream side. The return pipe line 27 is a pipe line that returns the first heat exchange liquid, which is risen in temperature through the electric motor 15, the inverter 20 and the battery charger 21, to the radiator 22.

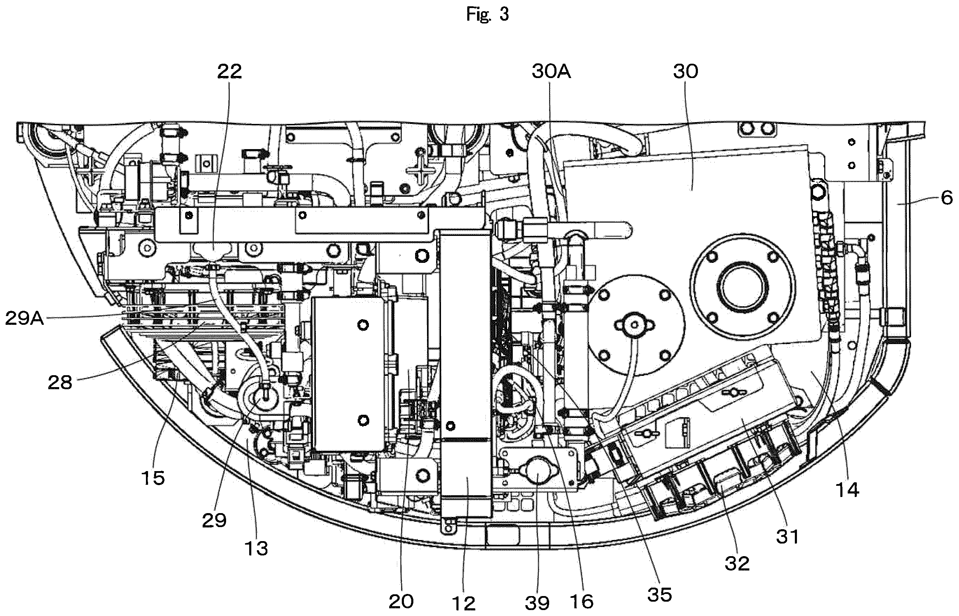

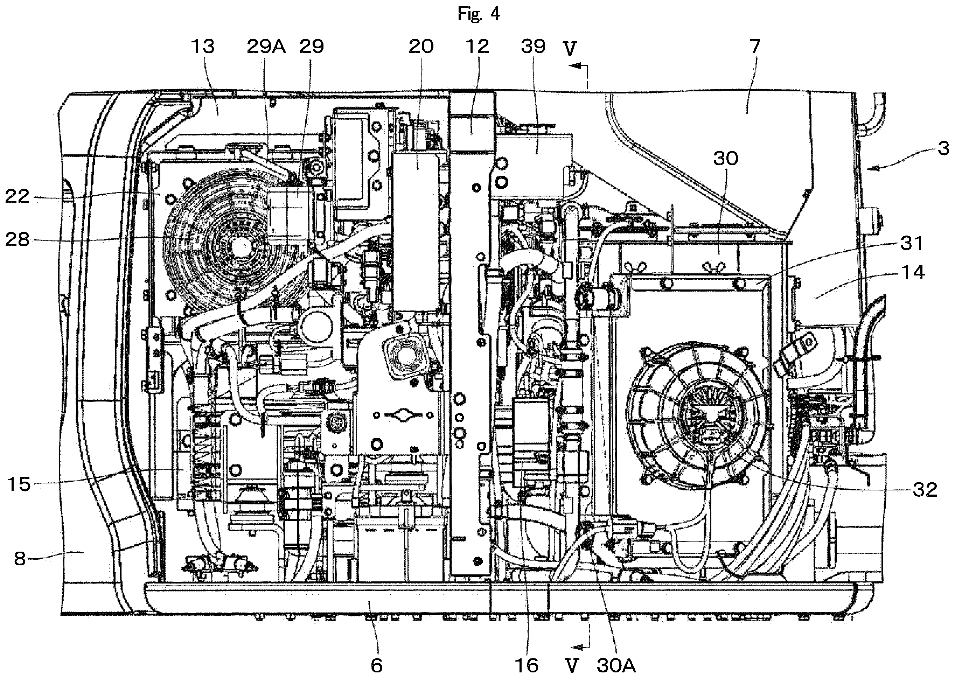

As shown in Fig. 3 and Fig. 4, the first cooling fan 28 as a cooling fan is positioned above the electric motor 15 to face the right side of the radiator 22. The first cooling fan 28 is rotated by a fan motor to suck in external air as cooling air from an air intake port of a left cover part in the exterior cover 9 and the cooling air is caused to pass through the radiator 22 while circulating around the battery unit 17. The cooling air having passed through the radiator 22 passes through the electrical equipment room 13 and is discharged from the discharge port 11A of the right rear cover part 11 in the exterior cover 9 to an exterior. It should be noted that a suction type fan may be used as the first cooling fan to supply outside air sucked from an air intake port of a right rear cover part to the radiator as cooling air.

The first reserve tank 29 is provided in the electrical equipment room 13. The first reserve tank 29 is connected via a hose 29A to the upper part of the radiator 22. The first reserve tank 29 is formed as a container made of a semitransparent resin material so that the inside of the first reserve tank 29 can be seen therethrough to see a liquid surface in the first reserve tank 29, for example. The first heat exchange liquid, a volume of which increases or decreases with a change in temperature, flows into and flows out from the first reserve tank 29. Specifically the first reserve tank 29, when the volume of the first heat exchange liquid increases with a rise in temperature of the first heat exchange liquid, receives an overflowed amount of the first heat exchange liquid from the radiator 22. On the other hand, the first reserve tank 29, when the volume of the first heat exchange liquid decreases with a reduction in temperature of the first heat exchange liquid, returns a decreased amount of the first heat exchange liquid back to the radiator 22.

Here, the first reserve tank 29 is provided between the first cooling fan 28 and the right rear cover part 11 (discharge port 11A) of the after-mentioned exterior cover 9. In other words, the first reserve tank 29 is located on the first cooling fan 28-side in back of the partition wall 12 on a basis of the partition wall 12 as a boundary, causing the cooling air having flowed into the electrical equipment room 13 through the radiator 22 to be exposed to the first reserve tank 29. As a result, the first reserve tank 29 is located to overlap with the first cooling fan 28 in the flowing direction of the cooling air generated by the first cooling fan 28. Because of this configuration, when the first cooling fan 28 is rotating, since the cooling air generated by the first cooling fan 28 is exposed to the first reserve tank 29, the temperature of the first heat exchange liquid in the first reserve tank 29 can be suppressed to be low.

The operating oil tank 30 is located on the right front side of the revolving frame 6. The operating oil tank 30 stores operating oil to be supplied to various kinds of hydraulic actuators and is connected to the hydraulic pump 16 and the like. The operating oil tank 30 is formed as a canned container in a boxy shape. The operating oil tank 30 is positioned in front of the partition wall 12 and a rear surface 30A of the operating oil tank 30 faces the partition wall 12 with a clearance. In other words, the operating oil tank 30 is located in the tank room 14 positioned in front of the electrical equipment room 13 across the partition wall 12.

Here, the operating oil tank 30 is warmed by returning the operating oil risen in temperature by the hydraulic pump 16 or the hydraulic actuator back thereto. The heat generated by the operating oil tank 30 is transferred to the after-mentioned second reserve tank 39 located in the vicinity of the operating oil tank 30.

The oil cooler 31 is a heat exchanger that cools the operating oil risen in temperature by the hydraulic pump 16 or the hydraulic actuator. The oil cooler 31 is positioned in the tank room 14 and is provided on the right side to the operating oil tank 30 to face the right front cover part 10 (discharge port 10A) of the exterior cover 9.

The second cooling fan 32 is provided on the right side to the oil cooler 31, that is, between the oil cooler 31 and the right front cover part 10 (discharge port 10A). The second cooling fan 32 is rotated by a fan motor (not shown) to generate cooling air toward the right front cover part 10 from the oil cooler 31. The cooling air having passed through the oil cooler 31 is discharged to an exterior from the discharge port 10A. Because of this, the second cooling fan 32 can supply (spray) the cooling air to the oil cooler 31.

A heating apparatus 33 supplies heated air into the cab 7 for improving a working environment of an operator. The heating apparatus 33 includes a heater core 34, the electrical heater 35 and the second reserve tank 39.

The heater core 34 is provided as part of indoor equipment in the cab 7. The heater core 34 is connected via after-mentioned circulation paths 36, 38 to the electrical heater 35. The heater core 34 causes the second heat exchange liquid heated by the electrical heater 35 to flow into a plurality of narrow pipes, thereby warming air blown into cab 7 from a blast fan (not shown) with heat of the second heat exchange liquid. Here, the second heat exchange liquid includes, for example, a water solution by mixing water with preservatives, antirust agents or the like or an oil solution.

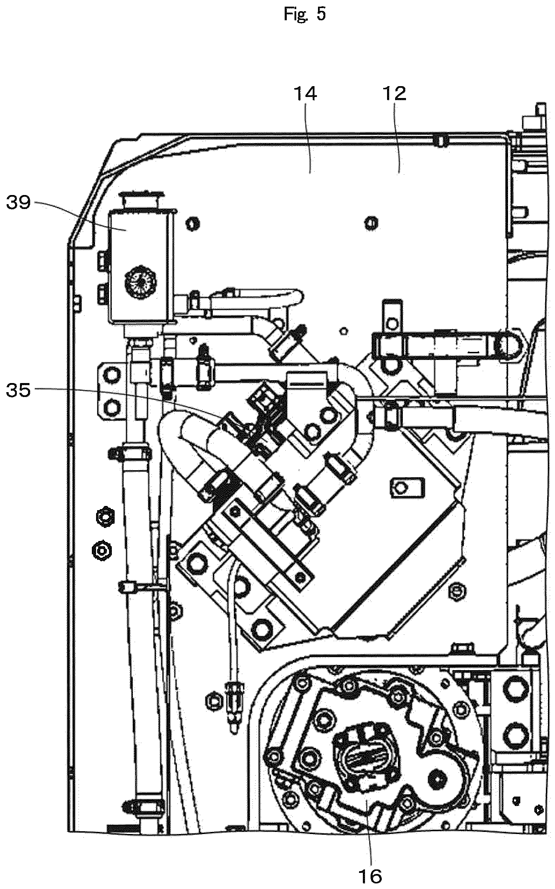

AS shown in Fig. 3 and Fig. 4, the electrical heater 35 is provided in the tank room 14. In detail, as shown in Fig. 5, the electrical heater 35 is attached on the front surface of the partition wall 12 as the rear side to the operating oil tank 30. The electrical heater 35 heats the second heat exchange liquid to be supplied to the heater core 34 with electric power supplied thereto.

The circulation path 36 establishes connection between the heater core 34 and the electrical heater 35 and is provided with a pump 37 on the upstream side. The second heat exchange liquid a temperature of which is lowered by heat exchange with the heater core 34 flows toward the electrical heater 35 in the circulation path 36.

In addition, the circulation path 38 establishes connection between the heater core 34 and the electrical heater 35 as similar to the circulation path 36. The second heat exchange liquid a temperature of which has risen by the electrical heater 35 flows toward the heater core 34 in the circulation path 38.

The second reserve tank 39 is located in the tank room 14 at the opposite side to the first cooling fan 28 on a basis of the partition wall 12 as a boundary. The second reserve tank 39 is connected via an outflow pipe line 40 closer to the upstream side than a pump 37 to the circulation path 36 and is connected via an inflow pipe line 41 to the circulation path 38. The second reserve tank 39 is formed as a container made of a semitransparent resin material so that the inside of the second reserve tank 39 can be seen therethrough to see a liquid surface in the second reserve tank 39, for example. The second heat exchange liquid, a volume of which increases or decreases with a change in temperature, flows into and flows out from the second reserve tank 39. Specifically the second reserve tank 39, when the volume of the second heat exchange liquid increases with a rise in temperature of the second heat exchange liquid, receives an overflowed amount of the second heat exchange liquid from the heating apparatus 33. On the other hand, the second reserve tank 39, when the volume of the second heat exchange liquid decreases with a reduction in temperature of the second heat exchange liquid, returns a reduced amount of the second heat exchange liquid back to the heating apparatus 33.

As described about the detailed arrangement of the second reserve tank 39, a clearance to the extent that the second reserve tank 39 can be accommodated therein is formed between the partition wall 12 and a rear surface 30A of the operating oil tank 30. The second reserve tank 39 is located in a position shifted to the right side (the outside) from the rear side of the operating oil tank 30. On top of that, the second reserve tank 39 is located closer to the front side than the partition wall 12 and closer to the rear side than the rear surface 30A of the operating oil tank 30, that is, between the partition wall 12 and the rear surface 30A of the operating oil tank 30. Because of this configuration, the second reserve tank 39 is located in a position as close as the heat of the operating oil tank 30 can transfer thereto. Therefore, the second heat exchange liquid in the second reserve tank 39 can be warmed by the heat of the operating oil tank 30 from before being heated by the electrical heater 35.

Also, the second reserve tank 39 is located in the tank room 14 at the opposite side to the first cooling fan 28 on a basis of the partition wall 12 as a boundary. This configuration prevents the temperature of the second heat exchange liquid from being lowered by the cooling air of the first cooling fan 28 hitting the second reserve tank 39. As a result, the second heat exchange liquid in the second reserve tank 39 can be warmed while suppressing a temperature reduction thereof.

The electric hydraulic excavator 1 according to the present embodiment has the configuration as described above, and hereinafter, an explanation will be made of the operation of the electric hydraulic excavator 1.

In a case where the electric hydraulic excavator 1 is used to perform the excavating work of earth and sand and the like, an operator gets in the cab 7 and activates the electric motor 15 to drive the hydraulic pump 16. When an operator operates the lever and pedal for traveling in this state, the lower traveling structure 2 causes the electric hydraulic excavator 1 to travel to the working site. As the electric hydraulic excavator 1 is moved to the working site, the operator operates the working control lever, thereby making it possible to perform the excavating work of earth and sand and the like by the working mechanism 5 while revolving the upper revolving structure 3.

Since the electric motor 15, the inverter 20 and the battery charger 21 generate heat at the operating of the electric hydraulic excavator 1, it is necessary to suppress the temperature rise of the electric motor 15, the inverter 20 and the battery charger 21. Therefore, by causing the first heat exchange liquid cooled in the radiator 22 to circulate in the first heat exchange liquid passage of the electric motor 15, the inverter 20 and the battery charger 21, the temperature rise of these components can be suppressed by the first heat exchange liquid. In addition, the first heat exchange liquid a temperature of which has risen through the electric motor 15, the inverter 20 and the battery charger 21 is returned back to the radiator 22 to be cooled. On the other hand, when the temperature of the first heat exchange liquid changes, the volume of the first heat exchange liquid increases or decreases. The increase or decrease in the volume of the first heat exchange liquid can be absorbed by the first reserve tank 29.

Further, at the work in the winter season, the heating apparatus 33 is used to increase the temperature in the cab 7. The heating apparatus 33 can supply the second heat exchange liquid heated by the electrical heater 35 to the heater core 34 by operating a switch (not shown) in the cab 7. In addition, the heating apparatus 33 can heat the inside of the cab 7 with the heated air by blowing the air generated in the blower fan through the heater core 34 into the cab 7.

In this way, according to the present embodiment the electric hydraulic excavator 1 is provided with the heater core 34 for heating, the electrical heater 35 for heating the second heat exchange liquid to be supplied to the heater core 34, and the second reserve tank 39 into which the second heat exchange liquid flows and from which the second heat exchange liquid flows out. On top of that, the partition wall 12 is provided to partition between the first cooling fan 28 and the electrical heater 35, and the first reserve tank 29 is located on the same side as the first cooling fan 28 on a basis of the partition wall 12 as a boundary. On the other hand, the second reserve tank 39 is located on the same side as the electrical heater 35 on a basis of the partition wall 12 as a boundary.

Therefore, the first heat exchange liquid in the first reserve tank 29 can be suppressed to be low in temperature by the cooling air generated with the rotating of the first cooling fan 28. Because of this, the first heat exchange liquid cooled can be returned back to the radiator 22 from the first reserve tank 29 to improve the cooling efficiency of the electric motor 15, the inverter 20 and the battery charger 21.

Also, according to the present embodiment the second reserve tank 39 is located on the same side as the electrical heater 35 on a basis of the partition wall 12 as a boundary, that is, at the opposite side to the first cooling fan 28. Because of this, the cooling air of the first cooling fan 28 can be prevented from hitting the second reserve tank 39. Therefore, a temperature reduction in the second heat exchange liquid in the second reserve tank 39 can be suppressed. As a result, the second heat exchange liquid not cooled can be returned back to heater core 34-side from the second reserve tank 39 to improve the heating efficiency.

In addition, the electric hydraulic excavator 1 is provided with the electrical equipment room 13 in which the electric motor 15 and the first cooling fan 28 are arranged, and the tank room 14 in which the operating oil tank 30 and the second reserve tank 39 that store the operating oil are arranged. On top of that, the partition wall 12 partitions between the electrical equipment room 13 and the tank room 14. Therefore, the partition wall 12 can separate the first cooling fan 28 on the electrical equipment room 13-side from the second reserve tank 39 on the tank room 14-side. Because of this, the partition wall 12 can suppress the second heat exchange liquid in the second reserve tank 39 from being low in temperature to improve the heating efficiency.

In addition, the first reserve tank 29 is located to overlay with the first cooling fan 28 in the flowing direction of the cooling air generated by the first cooling fan 28. This configuration enables the cooling air generated by the first cooling fan 28 to hit the first reserve tank 29, thus making it possible to suppress the temperature of the first heat exchange liquid in the first reserve tank 29 to be low.

Further, the second reserve tank 39 is located between the partition wall 12 and the operating oil tank 30. In other words, the second reserve tank 39 is located in a close position to the extent that the heat of the operating oil tank 30 can transfer thereto. As a result, the second heat exchange liquid in the second reserve tank 39 can be warmed by the heat of the operating oil tank 30 from before being risen in temperature by the electrical heater 35, leading to an improvement on the heating efficiency and power saving.

It should be noted that the embodiment shows as an example the electric hydraulic excavator 1 provided with the lower traveling structure 2 of the crawler type. However, the present invention is not limited thereto but may be applied to other electric construction machines such as an electric hydraulic excavator provided with a lower traveling structure of a wheel type.

### DESCRIPTION OF REFERENCE NUMERALS

- 1:: ELECTRIC HYDRAULIC EXCAVATOR (ELECTRIC CONSTRUCTION MACHINE)
- 12:: PARTITION WALL
- 13:: ELECTRICAL EQUIPMENT ROOM
- 14:: TANK ROOM
- 15:: ELECTRIC MOTOR
- 22:: RADIATOR
- 28:: FIRST COOLING FAN (COOLING FAN)
- 29:: FIRST RESERVE TANK
- 30:: OPERATING OIL TANK
- 34:: HEATER CORE
- 35:: ELETRICAL HEATER
- 39:: SECOND RESERVE TANK

## Claims

1. An electric construction machine comprising:
an electric motor as a power source;
a radiator that cools a first heat exchange liquid warmed by cooling the electric motor;
a cooling fan that applies cooling air to the radiator; and
a first reserve tank into which the first heat exchange liquid flows and from which the first heat exchange liquid flows out, **characterized by** including:
a heater core for heating;
an electrical heater for heating a second heat exchange liquid to be supplied to the heater core; and
a second reserve tank into which the second heat exchange liquid flows and from which the second heat exchange liquid flows out, wherein
a partition wall is provided between the cooling fan and the electrical heater,
the first reserve tank is located on the same side as the cooling fan on a basis of the partition wall as a boundary, and
the second reserve tank is located on the same side as the electrical heater on a basis of the partition wall as a boundary.

2. The electric construction machine according to claim 1, further, comprising:
an electrical equipment room in which the electric motor and the cooling fan are arranged;
an operating oil tank for storing operating oil; and
a tank room in which the operating oil tank and the second reserve tank are arranged, wherein
the partition wall partitions between the electrical equipment room and the tank room.
Claim 3. The electric construction machine according to claim 1, wherein
the first reserve tank is located to overlap with the cooling fan in a flowing direction of the cooling air generated by the cooling fan.
Claim 4. The electric construction machine according to claim 2, wherein
the second reserve tank is located between the partition wall and the operating oil tank.
